# EUROPEAN PATENT SPECIFICATION

(11) **EP 1 801 465 B1**
(45) Date of publication and mention of the grant of the patent: **29.04.2009**
(21) Application number: 06127024.5
(22) Date of filing: 22.12.2006
(51) Int. Cl.: F16H 59/02

(54) **Method and device for automated transmission gear control for an industrial or commercial vehicle gearbox**
Verfahren und Vorrichtung für eine automatisierte Getriebezahnradsteuerung für ein industrielles oder kommerzielles Fahrzeuggetriebe
Méthode et appareil pour le contrôle d'une transmission automatique pour une boîte de vitesses d'un véhicule industriel ou commercial

(30) Priority: 22.12.2005 IT MI20052447
(43) Date of publication of application: 27.06.2007
(73) Proprietor: IVECO S.p.A., 10156 Torino (IT)
(72) Inventor: Tihanyi, Katalin, 10151 Torino (IT); Steinkellner, Oliver, 89077 Ulm (DE)
(74) Representative: Borsano, Corrado

(56) References cited:
- DE-A1- 10 006 256
- US-A- 5 022 509
- US-B1- 6 260 432
- US-B1- 6 474 186

## Description

This invention relates to a method and device for automated transmission gear control for an industrial or commercial vehicle gearbox.

In industrial vehicles gear levers are used with a high number of forward gears and one or more reverse gears.

The manual activation of said gears by means of a conventional selection lever is generally an inconvenient operation, requiring considerable physical effort of the driver and can, in some cases, distract his/her attention from driving. Furthermore, considerable experience of the driver is required for an optimal choice of the gear to be coupled, taking into account the operative situation of the vehicle and the revolution speed limits within which the engine must operate.

These drawbacks have been only partially resolved in automated gear, i.e. in those in which gear coupling is performed by fluid actuator means controlled by an electronic control unit in response to input signals generated by a manual selection device; such device generally comprises a lever that can be shifted along a plane from a central rest position into two opposite activation positions, corresponding to the coupling of the gear higher or lower than the present one.

Means are frequently provided also for rapidly obtaining the coupling of a gear not adjacent to the present one; such means typically consist in push buttons and/or small levers associated to the handgrip of the lever.

An automated gear transmission control device of the abovecited type is described on US 6.260.432 B1, which discloses a selecting device for an automatic transmission of a motor vehicle, provided with a transmission gear lever on a steering wheel suited to being manually actuated by pushing in different control direction from a central rest position, and with push buttons arranged on the panel close to the lever and manually actuated. The transmission gear lever and the push buttons are connected to a control unit which receives corresponding input signals.

The control devices of the type briefly described render the selection of gears certainly more convenient with respect to traditional levers; however such devices entail for the driver actions that are scarcely intuitive, and somewhat far from the operating practice to which the driver is used. The negative consequences of this situation are considerable. During use, the driver must dedicate excessive mental commitment to the transmission gear operations, distracting attention from driving; furthermore it is relatively easy to perform accidental, emergency activation, with the evident risks that this entails. A control device, a method and a computer programme in accordance with the present invention are characterised by the features of independent claims 1, 3 and 8.

The purpose of this invention is therefore to indicate an automated transmission gear control method and device for an industrial or commercial vehicle gearbox that overcomes all the abovementioned drawbacks.

The subject of the present invention is an automated transmission gear device for an industrial or commercial vehicle gearbox, said device comprising a gear change, with automatic or semiautomatic function selection, a panel comprising a steering wheel (V), characterised in that it comprises:
- an electronic control unit, able to generating control signals for the transmission gear of said gear change, in response to input signals;
- a transmission gear lever on the steering wheel, able to being manually actuated by pushing in different control directions from a central rest position, with automatic return, a first and second control direction of the gear lever being arranged in opposite directions with respect to the rest position and actuating a one- or two- higher or lower transmission gear respectively, depending on the actuation duration;
- a first, a second, a third push buttons, arranged on the panel close to the transmission gear lever, actuated by means of manual pressure, with two different functions depending on the pressure duration, which select functions of: automatic or semiautomatic gear change, reverse gear, neutral position, forward manoeuvre, backward manoeuvre;
- said transmission gear lever and said push buttons providing to the electronic control unit said input signals, based on manual actuation.

It is a particular subject of the present invention a method and device for automated gear control for an industrial or commercial vehicle gearbox as better described in the claims, which form an integrating part of the present description.

The purposes and advantages of the present invention will be evident in view of the detailed description of one embodiment thereof (and of the variants thereof) and the appended drawings given by way of a non-limiting example, wherein:
figure 1 illustrates a schematic representation of an automatic and semiautomatic vehicle transmission gear control device, subject of the present invention;
figures 2 and 3 illustrate operative flow diagrams of the device.

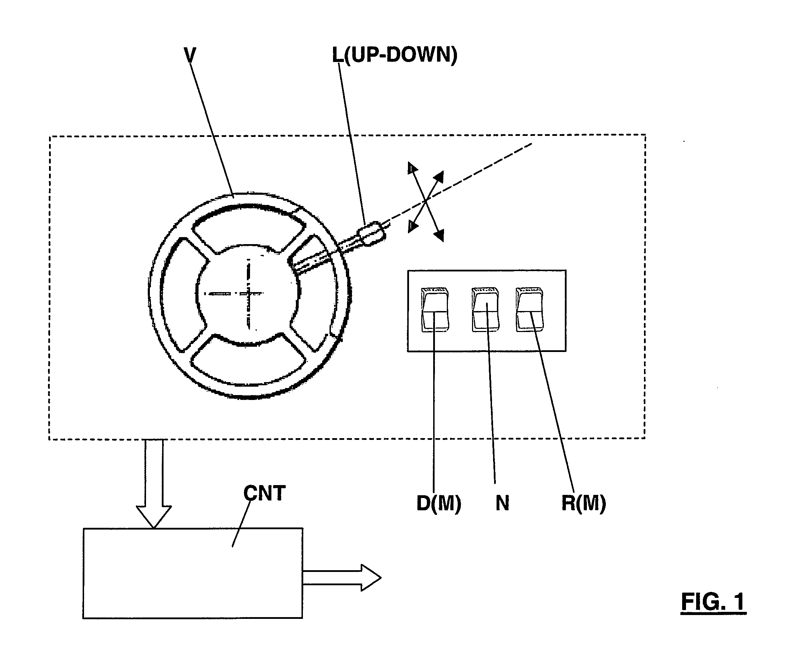

With reference in particular to figure 1, the control device comprises a lever on the steering wheel and push buttons on the dashboard positioned near to the lever.

The lever L (UP-DOWN) on the steering wheel V, which is used for changing gear, is a multi-purpose lever, in that it also serves for controlling other functions, such as Cruise Control, Speed Limit, Intarder, etc. It is provided with four orthogonal displacement directions, two of which with automatic return to the central position, and two push buttons.

Two opposite displacement directions are used for semiautomatic transmission gear control, in a higher and lower sense respectively. For example, a short motion in one direction controls a one-gear increase, whereas by keeping the lever displaced for a longer time, a two-gear increase is obtained. In the opposite direction a one- or two-gear decrease is obtained.

The other functions controlled by the level shall not be described.

Three adjacent push buttons are present, arranged on the panel close to the transmission gear lever, actuated by means of manual pressure, with different functions, depending also on the duration of pressure.

The push button D(M) selects the following forward gear functions:
with short pressure of the push button (control D), switch between automatic transmission gear and semi-automatic gear change; with long pressure (control Dm), forward manoeuvre function selection.

The push button N selects the neutral transmission gear position.

The push button R(M) selects the following reverse gear functions:
with short pressure of the push button (control R), selection of normal reverse gear, with long pressure (control Rm), reverse manoeuvre selection.

CNT indicates an electronic control unit, which receives the signals generated by the activation of the lever on the steering wheel, in particular the forward and reverse transmission gear signals, and also receives the signals from the three push buttons D(M), N and R(M), and performs the control of the transmission gear unit functioning mode.

CNT processes said signals and generates control signals that are further processed by the vehicle electronic control units, in order to generate control signals destined to the pneumatic transmission gear actuators.

Additionally a display may be present on the panel that shows the gear currently operated and the selected functioning mode.

The operating mode of the transmission gear control device subject of the invention shall now be described, signalling the control operations performed by the electronic control unit CNT, based on the controls given by the driver using the lever on the steering wheel and the push buttons on the panel.

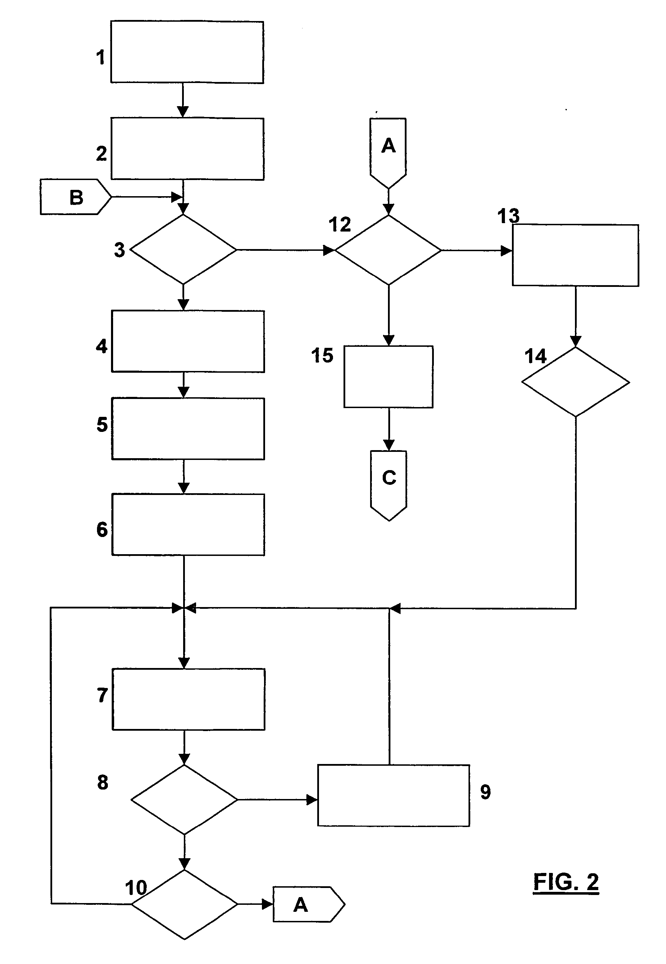

With reference in particular to figure 2, the "normal" driving functioning mode is described.

After vehicle ignition (block 1), a vehicle function control procedure starts (block 2). As far as the transmission gear is concerned, the automated transmission gear control device is arranged in the semiautomatic mode, with the gear lever in neutral position.

It then verifies (block 3) whether with push button D(M) control D is actuated. If YES, one proceeds to block 4, if NOT to block 12.

If the vehicle is in neutral, reverse or forward or backward manoeuvre, with command D it is possible to select automatic mode only.

At block 4, the automatic functioning mode is activated: the start pickup gear is determined, on the basis of information memorised previously, prior to the switching off of the engine, for example relating to the type of stopping place, whether uphill or downhill, or on the basis of the vehicle load quantity, etc.

At the subsequent block 5, the previously calculated pickup gear can be modified.

Then at block 6 one starts vehicle acceleration, with consequent automatic mode (block 7) running.

Block 8 entails temporary automatic mode transmission gear requests, activating the lever on the steering wheel towards higher or lower gears. In this case, the transmission gear control device automatically maintains the gear requested manually for a certain time, for example, 5 seconds (block 9), then it returns to the gear calculated in block 7.

From block 8, in the case of short pressure of the push button D(M), block 10, one moves on to block 12 starting semiautomatic mode functioning, otherwise one returns to block 7.

If at block 12, reverse gear is not requested (NO), one passes to block 13 wherein one can manually operate the lever on the steering wheel to change gear. If the push button D(M) is activated briefly, block 14, one returns to semiautomatic functioning (block 7).

If at block 12 reverse gear is requested (YES), one enters slow reverse (block 15); by means of activation of the lever on the steering wheel, it is possible to pass to quick reverse, being provided with two reverse speeds. If a single reverse speed is provided, the relative gear is coupled on activation of the push button R(M).

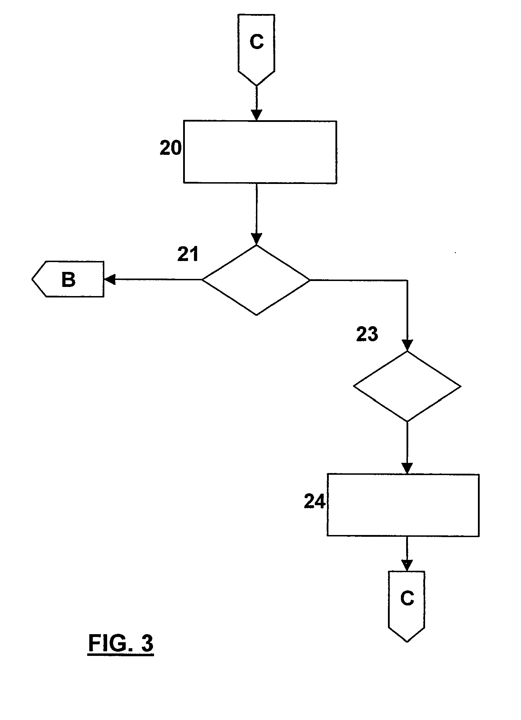

Reverse gear is quitted when the vehicle is motionless, point C of figure 3.

A further automatic transmission gear function may be present: in both automatic and semiautomatic mode, if the control unit CNT verifies an angular velocity of the engine shaft lower than a preset minimum, for example 1,000 rpm, and the transmission gear is in a gear higher than that set, by activating the lever L(UP-DOWN), in one- or two-gear decrease sense, the gear changes automatically so that the angular velocity of the engine shaft is taken to an average value.

With reference in particular to the flow diagram in figure 3, the "manoeuvre" driving functioning mode is described.

The start of the "manoeuvre" driving functioning mode (block 20), may take place if the vehicle is motionless, with the engine running and the transmission gear lever in neutral, without passing through engine switching off, which would otherwise cause, on re-ignition, a start from block 1 of fig. 2, as described above.

Furthermore, one can come to the block 20 condition at any time, after braking.

There are two possible driving modes during a manoeuvre.
- "Normal Manoeuvre": a low speed (for example up to 6 km/h) vehicle motion is actuated at low speeds, with low gears, forward with the gears up to 1st or 2nd, in reverse with the two reverse speeds if possible, otherwise with only one. In this case, clutch control is obtained with accelerator pedal stroke up to 70% of the maximum range, thus obtaining faster vehicle motion, with the potential to regulate the positioning thereof less accurately.
- "Special Manoeuvre": low speed vehicle motion is actuated, forwards with 1st gear only, in reverse with slow reverse gear only, if two reverse speeds are available. In this case, clutch control is obtained with accelerator pedal stroke up to the maximum range (100%), thus obtaining slower vehicle motion, but with the potential to regulate the positioning thereof in a very accurate way.

On vehicle motion, the lever on the steering wheel that determines a transmission gear can be activated (block 21).

One therefore passes to the "Normal Manoeuvre" function, which at the start of the motion, at low speeds, corresponds to normal semiautomatic mode driving described above in reference to the diagram of figure 2, point B, to which reference should be made.

Otherwise the push buttons D(M) or R(M) (block 23) can be activated for a longer time, so as to activate the "Special Manoeuvre" functioning (block 24) forward or backward, from which one can quit when the vehicle is motionless, returning to point C.

Furthermore, the electronic control unit CNT, in cooperation with other vehicle electronic control units, performs a check on the possibility of vehicle direction change.

A forward-reverse direction change or vice versa is only possible when the vehicle is motionless. Therefore is one of the two push buttons D(M) or R(M) is activated for both a short and a long time, when the other was previously activated, the relative gear coupling action is performed only if the vehicle has a speed equal to zero, otherwise it does not, and a warning tone signal (buzzering) is issued. The gear coupling action is also performed if the vehicle is decelerating and stops within a limited time (for example 1.5 seconds) from when the command is given, in order to facilitate and speed up the forward-backward manoeuvre operations.

The functions performed by the electronic control unit CNT can be advantageously realised by a computer programme that comprises encoding means for the performance of one or more steps of the method described above, when this programme is made to run on a computer. The scope of the invention is also therefore understood to extend to said computer programme and furthermore to computer-readable means comprising a recorded message, said computer-readable means comprising programme encoding means for the performance of one or more method steps, when said programme is made to run on a computer.

Those skilled in the art will be able to make variants to the non-limiting example described, all of which being contemplated within the scope of protection of this invention.

Using the description given above, those skilled in the art are able to realise the object of the invention, without introducing further construction details. This also applies to the computer programme for the realisation of the electronic control unit CNT, which can be written using a programming language in itself known in the vehicle field.

## Claims

1. Device for automated transmission gear control, for an industrial or commercial vehicle gearbox, said device comprising a transmission gear lever, with automatic or semiautomatic function selection, a panel comprising a steering wheel (V), comprising:
- a transmission gear lever (L(UP_DOWN)) on the steering wheel, able to being manually actuated by pushing in different control directions from a central rest position, with automatic return, a first and second control direction of the transmission gear lever being arranged in opposite directions with respect to the rest position and actuating a one- or two- higher or lower transmission gear respectively, depending on the actuation duration;
- a first, a second, a third push button (D(M), (N), R(M)), arranged on the panel close to the transmission gear lever, actuated by means of manual pressure, with different functions depending on the pressure duration, selecting functions of: automatic or semiautomatic gear change, reverse gear, neutral position, forward manoeuvre, backward manoeuvre;
- an electronic control unit (CNT), able to generating transmission gear control signals of said transmission gear lever, in response to input signals; said transmission gear lever and said push buttons providing to said electronic control unit (CNT) said input signals, based on manual actuation; the device being **characterised in that** :
- said first push button (D(M)) with a short pressure duration causes a switch between said automatic transmission gear function and said semiautomatic transmission gear function, whereas with the long pressure duration it causes a selection of said forward manoeuvre function;
- said second push button (N) causes a selection of said neutral position;
- said third push button (R(M)) with a short pressure duration causes a selection of said reverse gear function, whereas with a long pressure duration it determines a selection of said backward manoeuvre function;
- said transmission gear lever (L(UP-DOWN)), actuating in said first control direction a one-gear increase with a short duration actuation or a two-gear increase with a longer duration actuation, and actuating in said second control direction a one-gear decrease with short duration actuation or a two-gear decrease with a longer duration actuation.

2. Automated transmission gear control device according to claim 1, **characterised in that** two or more reverse gears are provided, these can be selected by actuation of said transmission gear lever (L(UP-DOWN)), with movement in said first control direction to pass from a lower to higher speed or with movement in said second control direction to pass from a higher to lower speed.

3. A method for automated transmission gear control for an industrial or commercial vehicle gearbox, comprising an automated transmission gear control device according to claim 1 or 2,-comprising, on vehicle ignition, the steps of:
- establishing said semiautomatic transmission gear function, with the transmission gear in neutral;
- after activation of said automatic transmission gear function, determining a start pickup gear, based on information memorised previously, before the switching off of the engine; the method being **characterised in that** said forward manoeuvre, backward manoeuvre functions can only be selected when the vehicle is motionless, the engine running and the transmission gear in neutral.

4. Method according to claim 3, **characterised in that** said forward manoeuvre, backward manoeuvre functions comprise:
- a "Normal Manoeuvre" actuating forward vehicle motion with low gears, backward with two reverse speeds if available, otherwise with just one, clutch control being possible with accelerator travel stroke up to 70% of the maximum range;
- a "Special Manoeuvre" actuating vehicle motion at very low speed, forward with 1^{st} gear only, backward with the slow reverse gear only, if two reverse speeds are available, said clutch control being possible with accelerator stroke up to a maximum range of 100%.

5. Method according to claim 3, **characterised in that** during the activation of said automatic transmission gear function it enables a temporary gear change, by means of the activation of said transmission gear lever (L(UP-DOWN)) towards higher or lower gears, automatically maintaining the gear required manually for a certain time, before returning to the gear set previously by said automatic transmission gear function.

6. Method according to claim 3, **characterised in that** a forward-reverse direction change is only allowed when the vehicle is motionless, so that if one of said first or third push buttons (D(M), R(M)) is activated for both a short and a long time, when the other was previously activated, the relative gear coupling action is only allowed if the vehicle has a speed equal to zero, as a warning tone signal (buzzering) is issued, said gear coupling action also being performed if the vehicle is decelerating and stops within a limited time following said activation.

7. Method according to claim 3, **characterised in that** in both said automatic mode and said semiautomatic mode, if an angular velocity of the engine shaft of said vehicle lower than a preset minimum is verified, and the transmission gear is in a gear higher than that set, by activating the transmission gear lever (L(UP-DOWN)), in a one- or two- gear decrease sense, said gear changes automatically so that said angular velocity of the engine shaft is taken to an average value.

8. Computer programme comprising programme encoding means suited to realising the steps of claims from 3 to 7, when said programme is made to run on a computer.

9. Computer-readable means comprising a registered programme, said computer-readable means comprising programme encoding means suited to realising the steps of claims from 3 to 7 when said programme is made to run on a computer.

## Patentansprüche

1. Vorrichtung zur automatisierten Steuerung des Gangwechsel für das Getriebe eines Industrie- oder Nutzfahrzeugs, wobei die genannte Vorrichtung einen Getriebeschalthebel mit automatischer oder halbautomatischer Funktionswahl umfasst sowie ein Armaturenbrett, welches ein Lenkrad (V) umfasst, welches enthält:
- einen Getriebeschalthebel {L(HOCH-HERUNTER)} am Lenkrad; welcher manuell betätigt werden kann, indem man ihn aus einer mittleren Ruhestellung in unterschiedliche Steuerungsrichtungen mit automatischer Rückführung schieben kann, wobei eine erste und eine zweite Steuerungsrichtung des Getriebeschalthebels in entgegengesetzten Richtungen in Bezug auf die Ruhestellung angeordnet sind und je nach der Dauer der Betätigung ein Höherschalten bzw. Herunterschalten um einen oder zwei Gänge bewirkt.
- eine erste, eine zweite und eine dritte Drucktaste {D(M), (N), R(M)}, welche auf dem Armaturenbrett nahe am Getriebeschalthebel angeordnet sind und mit Hilfe manuellen Drückens betätigt werden mit unterschiedlichen Funktionen, die von der Dauer des Drückens abhängen, wobei die folgenden Funktionen ausgewählt werden: automatischer oder halbautomatischer Gangwechsel, Rückwärtsgang, Leerlaufstellung, Vorwärtsmanöver, Rückwärtsmanöver;
- eine elektronische Steuerungseinheit (CNT), welche imstande ist, Gangwechsel-Steuersignale des genannten Getriebeschalthebels als Reaktion auf Eingangssignale zu erzeugen, wobei der genannte Getriebeschalthebel und die genannten Drucktasten auf die genannte elektronische Steuerungseinheit (CNT) die genannten Eingangssignale geben, die auf der manuellen Betätigung beruhen, wobei diese Vorrichtung **dadurch gekennzeichnet ist, dass**:
- die genannte erste Drucktaste {D(M)} bei kurzer Dauer des Drückens ein Umschalten zwischen der genannten automatischen Schaltfunktion und der genannten halbautomatischen Schaltfunktion bewirkt, während bei langer Dauer des Drückens diese Drucktaste eine Auswahl der genannten Funktion des Vorwärtsmanövers bewirkt;
- die genannte zweite Drucktaste {N} die Wahl der genannten Leerlaufstellung bewirkt;
- die genannte dritte Drucktaste {R(M)} bei kurzer Dauer des Drückens die Wahl der genannten Funktion des Rückwärtsgangs bewirkt, während eine lange Dauer des Drückens diese Drucktaste die Wahl der genannten Funktion des Rückwärtsmanövers bewirkt;
- wobei der genannte Getriebeschalthebel {L(HOCH-HERUNTER)} in der genannten ersten Steuerungsrichtung bei kurzer Betätigungsdauer ein Hochschalten um einen Gang oder bei langer Betätigungsdauer ein Hochschalten um zwei Gänge bewirkt und in der genannten zweiten Steuerungsrichtung bei kurzer Betätigungsdauer ein Herunterschalten um einen Gang oder bei langer Betätigungsdauer ein Herunterschalten um zwei Gänge bewirkt.

2. Vorrichtung zur automatisierten Steuerung des Gangwechsels gemäß Anspruch 1, **dadurch gekennzeichnet, dass** zwei oder mehr als zwei Rückwärtsgänge vorhanden sind und diese durch die Betätigung des genannten Getriebeschalthebels {L(HOCH-HERUNTER)} mit der Bewegung in die genannte erste Steuerungsrichtung ausgewählt werden können, um von einer niedrigeren Geschwindigkeit auf eine höhere überzugehen, oder mit der Bewegung in die genannte zweite Steuerungsrichtung, um von einer höheren Geschwindigkeit zu einer niedrigeren überzugehen.

3. Verfahren zur automatisierten Steuerung des Gangwechsels für das Getriebe eines Industrie- oder Nutzfahrzeugs, welches eine Vorrichtung zur automatisierten Steuerung des Gangwechsels gemäß Anspruch 1 oder 2 umfasst, wobei dieses Verfahren nach dem Anlassen des Fahrzeugs die folgenden Schritte umfasst:
- Versetzen in die genannte halbautomatische Schaltfunktion mit dem Getriebeschalthebel in Leerlaufstellung;
- nach Aktivierung der genannten automatischen Schaltfunktion Festlegen eines Anfahrgangs auf der Grundlage von Informationen, welche vorher beim Abschalten des Motors gespeichert worden sind,
wobei das Verfahren **dadurch gekennzeichnet ist, dass** die genannten Funktionen Vorwärtsmanöver und Rückwärtsmanöver nur dann gewählt werden können, wenn sich das Fahrzeug im Stand befindet, der Motor läuft und sich der Getriebeschalthebel in Leerlaufstellung befindet.

4. Verfahren nach Anspruch 3, **dadurch gekennzeichnet, dass** die genannten Funktionen Vorwärtsmanöver und Rückwärtsmanöver umfassen:
- ein "Normalmanöver", bei welchem die Vorwärtsbewegung des Fahrzeugs mit niedrigen Gängen und die Rückwärtsbewegung mit zwei Rückwärtsgängen, falls zwei vorhanden sind, ansonsten mit nur einem Rückwärtsgang, bewirkt werden, wobei die Kupplungsbetätigung mit einem Hubweg des Gaspedals bis zu 70 % des maximalen Bereich des Gaspedalwegs möglich ist;
- ein "Sondermanöver", bei welchem die Fahrzeugbewegung mit sehr geringer Geschwindigkeit bewirkt wird, und zwar vorwärts nur im 1. Gang und rückwärts nur mit dem langsamen Rückwärtsgang, wenn zwei Rückwärtsgänge zur Verfügung stehen,
wobei die genannte Kupplungsbetätigung mit einem Hubweg des Gaspedals bis zum maximalen Gaspedalweg von 100 % möglich ist.

5. Verfahren nach Anspruch 3, **dadurch gekennzeichnet, dass** während der Aktivierung der genannten automatischen Getriebefunktion dieses Verfahren einen zeitweiligen Gangwechsel mit Hilfe der Aktivierung des genannten Getriebeschalthebels {L(HOCH-HERUNTER)} in Richtung zu höheren oder niedrigeren Gängen ermöglicht, wobei der manuell einzulegende Gang über eine gewisse Zeitdauer beibehalten bleibt, bevor Rückkehr zu dem Gang erfolgt, welcher vorher durch die genannte automatische Getriebefunktion eingestellt worden ist.

6. Verfahren nach Anspruch 3, **dadurch gekennzeichnet, dass** ein Fahrtrichtungswechsel vorwärts/rückwärts nur dann möglich ist, wenn sich das Fahrzeug im Stand befindet, so dass, falls eine der genannten ersten oder dritten Drucktaste {D(M), R(M)} sowohl für eine kurze und eine lange Zeitspanne aktiviert ist, wenn die andere vorher aktiviert war, der zugehörige Kupplungsvorgang nur dann zulässig ist, wenn das Fahrzeug eine Geschwindigkeit gleich Null aufweist, während ein Warnsignal (Summton) abgegeben wird, wobei der genannte Kupplungsvorgang auch ausgeführt wird, wenn das Fahrzeug innerhalb einer begrenzten Zeitspanne nach der genannten Aktivierung abbremst und anhält.

7. Verfahren nach Anspruch 3, **dadurch gekennzeichnet, dass**, wenn die Kurbelwellen-Winkelgeschwindigkeit des genannten Fahrzeugs kleiner als ein vorher eingestellter Minimalwert ist und das Getriebe sich in einem höheren Gang als dem eingestellten befindet, sowohl der genannte automatische als auch der genannte halbautomatische Modus durch Betätigung des Getriebeschalthebels {L(HOCH-HERUNTER)} im Sinne des Herunterschalten um einen Gang oder um zwei Gänge das genannte Getriebe automatisch umschaltet, so dass die genannte Kurbelwellen-Winkelgeschwindigkeit als Durchschnittswert genommen wird.

8. Computerprogramm, welches Mittel zur Programmkodierung umfasst, welche geeignet sind, die Schritte der Ansprüche 3 bis 7 zu verwirklichen, wenn man das genannte Programm auf einem Computer laufen lässt.

9. Computerlesbare Mittel, welche ein registriertes Programm umfassen, wobei die genannten computerlesbaren Mittel Programmkodiermittel umfassen, die geeignet sind, die Schritte der Ansprüche 3 bis 7 zu verwirklichen, wenn man das genannte Programm auf einem Computer laufen lässt.

## Revendications

1. Dispositif de commande de vitesse de transmission automatisée, pour une boîte de vitesses de véhicule industriel ou commercial, lequel dispositif comprend un levier de vitesse de transmission avec une sélection de fonction automatique ou semi-automatique, un panneau comprenant un volant (V), comprenant :
- un levier de vitesse de transmission (L(UP_DOWN)) sur le volant, pouvant être actionné manuellement en le poussant dans différentes directions de commande depuis une position de repos centrale, avec un rappel automatique, une première et une seconde directions de commande du levier de vitesse de transmission se situant dans des directions opposées par rapport à la position de repos et actionnant un rapport de transmission une fois ou deux fois plus haut ou plus bas, respectivement, en fonction de la durée d'actionnement ;
- des premier, second et troisième boutons poussoirs (D(M), (N), R(M)) disposés sur le panneau à proximité du levier de vitesse de transmission, actionnés par une pression manuelle et ayant différentes fonctions en fonction de la durée de la pression, et permettant de choisir les fonctions de changement de vitesse automatique ou semi-automatique, marche arrière, position de point mort, manoeuvre vers l'avant, manoeuvre vers l'arrière ;
- une unité de commande électronique (CNT) capable de générer des signaux de commande de vitesse de transmission dudit levier de vitesse de transmission en réponse à des signaux d'entrée ; ledit levier de vitesse de transmission et lesdits boutons poussoirs fournissant lesdits signaux d'entrée à ladite unité de commande électronique (CNT) en fonction de l'actionnement manuel ;
lequel dispositif est **caractérisé en ce que** :
- ledit premier bouton poussoir (D(M)), lors d'une pression de courte durée, entraîne une commutation entre la fonction de rapport de transmission automatique et la fonction de rapport de transmission semi-automatique, tandis que, lors d'une pression de longue durée, il entraîne la sélection de ladite fonction de manoeuvre vers l' avant ;
- ledit second bouton poussoir (N) entraîne la sélection de ladite position de point mort ;
- ledit troisième bouton poussoir (R(M)), lors d'une pression de courte durée, entraîne la sélection de ladite fonction de marche arrière, tandis que, lors d'une pression de longue durée, il entraîne la sélection de ladite fonction de manoeuvre vers l'arrière ;
- ledit levier de vitesse de transmission (L(UP_DOWN)), lorsqu'il est actionné dans ladite première direction de commande, entraîne une augmentation d'un rapport lors d'un actionnement de courte durée ou une augmentation de deux rapports lors d'un actionnement de plus longue durée et, lorsqu'il est actionné dans la seconde direction de commande, entraîne une diminution d'un rapport lors d'un actionnement de courte durée ou une diminution de deux rapports lors d'un actionnement de plus longue durée.

2. Dispositif de commande de vitesse de transmission automatisée selon la revendication 1, **caractérisé en ce que** deux rapports de marche arrière ou plus sont prévus et peuvent être choisis par l'actionnement dudit levier de vitesse de transmission (L(UP_DOWN)), un mouvement dans ladite première direction de commande faisant passer d'une vitesse basse à une vitesse élevée et un mouvement dans ladite seconde direction de commande faisant passer d'une vitesse élevée à une vitesse basse.

3. Procédé de commande de vitesse de transmission automatisée pour une boîte de vitesses de véhicule industriel ou commercial, comprenant un dispositif de commande de vitesse de transmission automatisée selon la revendication 1 ou 2, et comprenant, lors du démarrage du véhicule, les étapes consistant à :
- établir ladite fonction de rapport de transmission semi-automatique, le rapport de transmission étant au point mort ;
- après activation de ladite fonction de rapport de transmission automatique, déterminer un rapport de détection de démarrage, à partir d'informations préalablement mémorisées, avant d'arrêter le moteur ;
lequel procédé est **caractérisé en ce que** lesdites fonctions de manoeuvre vers l'avant et de manoeuvre vers l'arrière peuvent uniquement être sélectionnées lorsque le véhicule est immobile, moteur en marche et rapport de transmission au point mort.

4. Procédé selon la revendication 3, **caractérisé en ce que** lesdites fonctions de manoeuvre vers l'avant et de manoeuvre vers l'arrière comprennent :
- une « Manoeuvre normale » entraînant un mouvement vers l'avant du véhicule à des rapports bas, et vers l'arrière selon deux vitesses de recul si disponibles, sinon juste une, une commande d'embrayage étant possible avec une course de déplacement d'accélérateur allant jusqu'à 70 % de la plage maximale ;
- une « Manoeuvre spéciale » entraînant un mouvement du véhicule à très basse vitesse, en avant sur le premier rapport seulement et en arrière sur le rapport de marche arrière lent uniquement si deux vitesses de recul sont disponibles, ladite commande d'embrayage étant possible avec la course d'accélérateur allant jusqu'à la plage maximale de 100 %.

5. Procédé selon la revendication 3, **caractérisé en ce que**, pendant l'activation de ladite fonction de rapport de transmission automatique, il permet un changement de vitesse temporaire par l'activation dudit levier de vitesse de transmission (L(UP_DOWN)) vers des rapports plus élevés ou plus bas, maintenant automatiquement le rapport requis manuellement pendant un certain temps avant de revenir au rapport réglé préalablement par ladite fonction de rapport de transmission automatique.

6. Procédé selon la revendication 3, **caractérisé en ce qu'**un changement de direction avant-arrière est permis uniquement lorsque le véhicule est immobile de sorte que, si l'un desdits premier ou troisième boutons poussoirs (D(M), R(M)) est activé pendant un temps long ou court lorsque l'autre a été préalablement activé, l'action de couplage de rapport relative est uniquement permise si le véhicule a une vitesse égale à zéro avec émission d'un signal sonore d'avertissement (buzzing), ladite action de couplage de rapport étant également effectuée si le véhicule ralentit et s'arrête dans un laps de temps limité suivant ladite activation.

7. Procédé selon la revendication 3, **caractérisé en ce que**, dans ledit mode automatique et dans ledit mode semi-automatique, si une vitesse angulaire de l'arbre du moteur dudit véhicule inférieure à un minimum pré-établi est vérifiée, et si le rapport de transmission est un rapport plus élevé que celui réglé par activation du levier de vitesse de transmission (L(UP_DOWN)) dans le sens d'une diminution d'un ou de deux rapports, ledit rapport change automatiquement de sorte que ladite vitesse angulaire de l'arbre du moteur est prise à une valeur moyenne.

8. Programme informatique comprenant un moyen de codage de programme permettant de réaliser les étapes des revendications 3 à 7 lorsque ledit programme tourne sur un ordinateur.

9. Support lisible par ordinateur comprenant un programme enregistré, lequel support lisible par ordinateur comprend un moyen de codage de programme permettant de réaliser les étapes des revendications 3 à 7 lorsque ledit programme tourne sur un ordinateur.
